Europäisches Patentamt

European Patent Office

Office européen des brevets

(19)

(11) Publication number: **0 519 556 A1**

## (12) EUROPEAN PATENT APPLICATION

(21) Application number: **92201697.7**

(22) Date of filing: **11.06.92**

(51) Int. Cl.5: **B01J 27/051**, B01J 37/08, B01J 31/24, C10G 45/04

(30) Priority: **20.06.91 IT MI911696**

(43) Date of publication of application:
**23.12.92 Bulletin 92/52**

(84) Designated Contracting States:
**DE ES FR GB NL**

(71) Applicant: **SNAMPROGETTI S.p.A.**
**Corso Venezia 16**
**I-20121 Milan(IT)**
Applicant: **ENIRICERCHE S.p.A.**
**Corso Venezia 16**
**I-20121 Milan(IT)**

(72) Inventor: **Marchionna, Mario**
**Viale Abruzzi 44**
**I-20131 Milan(IT)**
Inventor: **Lami, Massimo**
**Via Sardegna 35**
**I-20146 Milan(IT)**
Inventor: **Ancillotti, Francesco**
**Via Agadir 14/C**
**I-20097 San Donato Milanese, Milan(IT)**

(74) Representative: **Roggero, Sergio et al**
**Ing. Barzanò & Zanardo Milano S.p.A. Via**
**Borgonuovo 10**
**I-20121 Milano(IT)**

(54) **Catalyst precursors, relevant active catalysts and their use in hydrotreating reactions.**

(57) Complexes of formula

$Q_2[Mo_xS_y]$,

wherein:
x is equal to, or larger than, 1;
y is equal to, or larger than, 4;
Q is a phosphorus containing salt of formula

$PH_zR_{4-z}$ or $(PPh_3)N(PPh_3)$,

in which
 R     is an alkyl, cycloalkyl, aryl or arylalkyl group containing from 1 to 20 carbon atoms,
 Ph    is the phenyl group, and
 z     is an integer comprised within the range of from 0 to 4,
are useful precursors for hydrotreating catalysts for heavy petroleum fractions.

EP 0 519 556 A1

The present invention relates to catalyst precursors constituted by molybdenum/sulfur containing complexes, to the releant active catalysts obtained by thermal treatment, and to their use in hydrotreating reactions.

The increasing interest in such petroleum products such as gasolines, middle distillates, and so forth, imposes the need for heavier and heavier crude oils to be exploited, aiming at using all petroleum raw materials, even the poorest ones.

Therefore, petroleum industry is more and more interested in the conversion of such raw materials as coal, heavy residues, bitumens, and so forth. Unfortunately these raw materials contain a large number of impurities (such as, e.g., S, N, Ni, V) which have to be removed in order to make it possible the treated residue or product to be used in downstream processes.

In the meantime, also converting the product into a lighter one by means of hydrogenation/thermal, preferably catalytic treatment, is desirable as well. Precisely due to this reason, the interest in hydrotreating processes, whose purpose precisely is of converting the heavy residue into lighter products, simultaneously removing the undesirable components, is growing.

This type of treatment can be applied to a variety of raw materials, such as solvents, light, middle and heavy distillates, residues, and so forth.

The most common catalysts for this reaction type are represented by cobalt-molybdate supported on $Al_2O_3$, nickel on $Al_2O_3$, nickel-molybdate on $Al_2O_3$. It is furthermore known that the sulfides of these transition metals are the active species involved in the catalytic processes.

The use of $MoS_2$ (in bulk or supported on inorganic oxides, such as $Al_2O_3$) in this type of processes is known from the prior art; furthermore, this compound is also capable of catalyzing other reactions, such as the hydrogenation, methanation, water-gas shift reactions, and so forth.

In general, these catalysts are the more active, the larger their surface areas, or the more dispersed they are. Therefore, it is necessary to try to obtain catalysts with larger and larger surface-areas, or, in case a dispersed-catalyst process is used, with a higher and higher dispersion degree.

As a consequence, the method of preparation may result conclusive as regards the activity of the catalysts; furthemore, the presence of promoters (for example, Co or Ni) favours the obtainment of higher activities.

For example, in US-4243553 and US-4243554 patents (A.W. Naumann, A.S. Behan, (1981), UNION CARBIDE), the inventors claim that catalysts based on $MoS_2$ can be obtained by means of the decomposition of derivatives of $X_2[Mo_xS_y]$ type, at temperatures comprised within the range of from 300 to 800°C, in an anaerobic atmosphere.

In such complexes, X is represented by ammonium salts, which may be either substituted or non-substituted; the sulfur-containing complexes can be mononuclear as well as polynuclear ("cluster"), such as $[Mo_3S_{13}]^{2-}$ or $[Mo_2S_{12}]^{2-}$ (A. Müller et al. Angew. Chem, Int. Ed. Engl., 17, (1978), 279).

The matter of fact that these types of species undergo decomposition at high temperatures and in a non-oxidizing atmosphere to yield $MoS_2$ has been widly demonstrated in technical literature, as described in following papers:

- M. A. Harmer, T. R. Halbert, W. H. Pan, C. L. Coyle, S. A. Cohen, E. I. Stiefel, Polyhedron, 5, (1986), 341
- A. Müller, Polyhedron, 5, (1986), 323

A teaching similar to as taught in the patents cited hereinabove, even if much more general, had already been supplied previously in US-3876755 patent (C. R. Kurtak, L. D. Hartzog, (1975), UNION CARBIDE).

Ammonium salts, such as $(Et_4N)_2[MoS_4]$ were also supported on allumina, with supported catalysts being obtained which are much more active than those prepared by conventional routes (US-4431747: R. L. Seiver, R. R. Chianelli - EXXON).

Furthermore, the same approach was used with hetero-metallic complexes of $(NR_4)_2[M(MoS_4)_2]$ type, in which M = Fe, Co, Ni, as shown in EP-133031 patent application (R. R. Chianelli, T. C. Ho, W. H. Pan, E. I. Stiefel, (1985), EXXON).

Furthermore, as regards their treating process, it should be observed that at present the use of dispersed-catalysts (slurry) processes is regarded as more and more interesting, because this type of technology makes it possible some typical limitations of fixed-bed technology, such as the phenomenon of pore occlusion (with consequent poisoning of the catalyst), and the more difficult thermal control. Furthermore, the dispersed, non-supported, catalysts are much more active and make it possible also the ultra-heavy residues to be treated.

The typical catalysts for this type of technology are based on molybdenum; molybdenum naphthenate and molybdenyl-acetylacetonate are the most studied precursors (see, e.g., JP-0167257, (1989), AGENCY OF IND. SCI. TECH. and H. H. Chen, D. S. Montgomery, O. P. Strauss, AOSTRA J. Res., 4, (1988), 143).

The present invention relates to hydrotreating or hydrocracking processes with catalysts dispersed in the reaction medium and not supported, obtained in an analogous way to has disclosed in US-4243553 and US-4243554, but by starting from phosphorus containing salts.

The presence of phosphorus in the catalyst precursor compound perform a clear promoting effect relatively to the ammonium salts, claimed by the patents cited hereinabove. The catalyst can be regarded as a "self-promoted" one, in that the phosphorus promoter and molybdenum catalytic metal are both part of the same compound, according to the definition given in EP 133 031.

One should furthermore observe that this type of catalysts were never used before in slurry processes for the hydrotreating of heavy residues.

The hydrotreating processes relate to any processes which include the presence of hydrogen; for exemplifying purposes, the hydro-denitration (HDN) reactions, hydro-desulfurization (HDS) reactions, the reactions of hydrogenation of aromatic and aliphatic unsaturated hydrocarbons, hydro-demetallation (HDM) reactions are cited.

The catalyst precursors for hydrotreating heavy petroleum fractions, which are the subject-matter of the present invention, are characterized in that they have the following formula

$$Q_2[Mo_xS_y],$$

wherein:
x is equal to, or larger than, 1;
y is equal to, or larger than, 4;
the ratio of y/x is preferably equal to, or lower than, 4
Q is a phosphorus containing salt of formula

$$PH_zR_{4-z}$$

or

$$(PPh_3)N(PPh_3)$$

(i.e., bis-triphenylphosphine-iminium or PPN),
wherein
R     is an alkyl, cycloalkyl, aryl or arylalkyl group containing from 1 to 20 carbon atoms and preferably from 1 to 10 carbon atoms,
Ph   is the phenyl group, and
z      is an integer comprised within the range of from 0 to 4, when x is equal to 3, y is lower than 10.

Preferably, the phosphorus-containing salts in the first formula are tetra-substituted salts (z = 0), and more preferably are tetraphenyl-phosphonium salts.

The sulfur-containing molybdenum compounds $[Mo_xS_y]^{2-}$ can be either mono-nuclear or of cluster type, preferably with y/x smaller than, or equal to, 4, such as in $[MoS_4]^{2-}$ and in $[Mo_3S_9]^{2-}$.

Such complexes can be prepared as reported in literature; a review of this type of chemistry can be found in following papers:
- M. A. Harmer, T. R. Halbert, W. H. Pan, C. L. Coyle, S. A. Cohen, E. I. Stiefel, Polyhedron, 5, (1986), 341
- A. Müller, Polyhedron, 5, (1986), 323

The preparation of $(PPh_4)_2[MoS_4]$ is described in A. I. Hadjikyriacou, D. Coucouvanis, Inorg. Synth., 27, (1990), 39, and the preparation of $(PPh_4)_2[Mo_3S_9]$ is described in W. H. Pan, M. E. Leonowicz, E. I. Stiefel, Inorg. Chem., 22, (1983), 672.

A further object of the present invention is represented by the fact that the precursors of formula $Q_2$-$[Mo_xS_y]$ can operate also in the presence of typical oxygen-containing precursors for slurry processes, originating a precursor system displaying improved characteristics over those systems which contain the individual precursors.

In particular, such a precursor system can be constituted by one or more oxygen-containing compounds of molybdenum, and a precursor of formula $Q_2[Mo_xS_y]$.

The oxygen-containing molybdenum compounds can be preferably selected from among molybdenyl-acetylacetonate, molybdenum naphtanate and molybdenum hexa-carbonyl.

In said precursor system, the percent content of molybdenum in the precursor of formula $Q_2[Mo_xS_y]$ is

preferably comprised within the range of from 0.005 to 0.5% by weight, and in the oxygen-containing compound is comprised within the range of from 0.01 to 0.9% by weight.

The oxygen-containing precursors originate very good hydro-desulfurization catalysts and, in general, hydrotreating catalysts, but do not supply high yields in light products.

The addition of complexes of $Q_2[Mo_xS_y]$ type to oxygen-containing compounds originates, on the contrary, a novel catalytic system which displays the high desulfurization capability of the oxygenated precursors, but retains the capability to cause hydrocracking, shown by compounds of $Q_2[Mo_xS_y]$ type.

All these precursors are particularly useful for being then used in processes for heavy residues hydrotreating.

The process for hydrotreating heavy petroleum fractions can be carried out by causing said fractions (which generally show very high boiling ranges) to react, at high temperatures, in the presence of hydrogen and of the catalyst precursor of formula $Q_2[Mo_xS_y]$ as disclosed hereinabove, to which molybdenum oxygen-containing compound may be possibly added, in bulk and not supported.

The complexes of formula $Q_2[Mo_xS_y]$, in the presence, or less, of an oxygen-containing molybdenum compound, can be added as such to the heavy residue (or petroleum fractions), then the whole reaction mixture is brought to the reaction temperature at variable temperature increasing rates, as disclosed in US-4243553 and US-4243554, in a hydrogenating, as well as sulfurizing, atmosphere, due to the presence of sulfur in the heavy residue, as well as due to the optional addition of $H_2S$ during the system conditioning period.

Under these conditions, the complexes are degraded to yield the active catalyst. When the reaction temperature is reached, the hydrogen pressure is adjusted at the desired value, and the hydrotreating reaction is started.

The method of addition of the catalyst precursor to the product to be hydrotreated consists in adding the molybdenum complex as such, or as a solution thereof in a volatile solvent (boiling point $<100°C$), which solvent can be subsequently easily removed. The catalyst precursor can also be activated before being added to the residue.

In that case, an active catalyst can be obtained by activating the precursor of formula $Q_2[Mo_xS_y]$, possibly admixed with one or more molybdenum oxygen-containing compounds, by thermal treatment at temperatures higher than $150°C$ under a non-oxidizing atmosphere, preferably under a hydrogen atmosphere, with the optional addition of $H_2S$.

The exact nature and composition of the species present on the catalyst, obtained by heating the above disclosed precursor, are not precisely known, even if they are probably very close to those typical for $MoS_2$. However the precise surficial composition is thought to be probably influenced by the composition of the complex used as the starting species.

In case an active catalyst is used, the process for hydrotreating heavy petroleum fractions essentially consists in causing said fractions to react, at high temperatures, in the presence of hydrogen, by adding the active catalyst obtained as disclosed hereinabove. For such hydrotreating processes, carried out either by adding an already activated precursor of formula $Q_2[Mo_xS_y]$, or to be activated, or a precursor constituted by the precursor of formula $Q_2[Mo_xS_y]$ and oxygen-containing molybdenum compounds, the residue used as the feedstock (i.e., in general, the heavy hydrocarbon fractions) can be an atmospheric residue, as well as a vacuum residue; the molybdenum content, as expressed as the molybdenum percent by weight relatively to the residue, should be preferably comprised within the range of from 0.005% to 5%, still more preferably of from 0.01% to 1%.

The treatment time may range according to the conversion level which one wishes to obtain and, in a continuous process, the reactor shall be sized according to the desired conversion level.

In particular, the typical conditions for hydrotreating heavy residues are temperatures comprised within the range of from 325 to $475°C$, and hydrogen pressures generally higher than 5 MPa, it having to be considered that an increase in hydrogen pressure will always lead to higher conversion values.

As is better described in the following examples, the present invention makes also it possible the residue used as the feedstock to be de-sulfurized, de-nitrated, de-oxygenated and de-metallated.

Some examples are given now, the purpose of which is of better illustrating the invention, it being anyway understood that in no way such invention shall be limited to said examples.

Example 1
- - - - - -

350 g of Belayim residue and 9.87 g of $(PPh_4)_2[MoS_4]$ (0.3% by weight of molybdenum, relatively to the weight of the residue) are charged to an autoclave of one litre of capacity, of INCONEL 600 steel, equipped with a magnetic-driven mechanical stirring means.

The autoclave is sealed, and is pressurized with $H_2$ at 7 MPa at room temperature, and the heating is started at a heating rate of approximately 3.5°C/minute. When the desired temperature is reached, in this case 400°C, $H_2$ is increased up to 20 MPa (at the specified temperature), and this pressure is maintained for a reaction time of two hours, with a constant flow rate of $H_2$ (about 10 litres/hour).

At the end of the test, heating is discontinued and the autoclave is rapidly cooled with a forced air flow. When cooled, the gas is vented and both the gas and the liquid reaction products are analyzed on the basis of standard ASTM methods, in particular the ASTM method D 2887, as regards the composition of the liquid phase, the ASTM method D 1552/88 for titrating sulfur. The metal contents (Ni and V) are analyzed, after the preliminary acidic digestion of the sample, by a following analisys by atomic absorption spectrometry with a graphite oven.

The useful characteristics of Belayim residue are reported now:
* Density: 0.9825 g/cc (15°C)
* Viscosity: 1747 cst (50°C)

The distillation curve obtained by the ASTM method D 2887 demonstrates the presence of an amount of 3% of a fraction boiling under 350°C (350⁻), and of an amount of 66% of a fraction boiling above 510°C (510⁺).

The sulfur level is of 3.52%, nitrogen level is of 0.60%, the concentration of Ni is of 76 ppm, and V concentration is of 98 ppm.

In table 1, the following data is reported for this test, and for the following tests: the obtained percentages of product boiling under 350°C (350⁻), which indicates the ability of the catalytic system to produce useful light product; the percentage of product boiling above 510°C (510⁺), which results to be the most difficultly treated feedstock, and furthermore the percentages of sulfur, nickel and vanadium in the residual liquid product (all percent values are referred to the residue used as the feedstock).

Example 2 (Comparison example)
─ ─ ─ ─ ─ ─

This example shows that the substituted ammonium salts, claimed in the patents cited hereinabove, are less efficient than the corresponding phosphonium salts.

The test is carried out under the same conditions as of example 1, but using 5.28 g of $(Et_4 N)_2 [MoS_4]$.

Example 3 (Comparison example)
─ ─ ─ ─ ─ ─

This example shows that also the non-substituted ammonium salts, claimed in the patents cited hereinabove, are less efficient than the corresponding phosphonium salts.

The test is carried under the same conditions as of example 1, but using 2.84 g of $(NH_4)_2 [MoS_4]$.

It should be observed that in this case a large amount of coal is formed owing to the coking reaction. This is the only reported test in which coal is formed. This is an undesirable phenomenon and should be absolutely avoided.

Example 4
─ ─ ─ ─ ─ ─

This example shows that even better results are obtained when phosphonium salts of cluster compounds with a low ratio of S/Mo are used.

The test is carried out under the same condition as of example 1, but charging to the reaction 4.56 g of $(PPh_4)_2 [Mo_3 S_9]$.

Example 5
─ ─ ─ ─ ─ ─

This example shows that an increase in the reaction time leads to a product having better characteristics.

The test is carried out under the same conditions as of example 1, but for a reaction time of 5 hours.

Example 6
─ ─ ─ ─ ─ ─

This example shows that an increase in temperature leads to a further improvement in the characteristics of the obtained product. The test is carried out under the same conditions as of example 5, and according to the modalities as disclosed in example 1, but at a temperature of 420°C.

Example 7

This example shows that the system can also operate with a higher concentration of molybdenum. The test is carried out under the same conditions as of Example 1, but operating for a reaction time of 5 hours and charging to the reaction 29.61 g of $(PPh_4)_2[MoS_4]$ (1% by weight of Mo, relatively to the weight of the residue).

Example 8

This example shows that the addition of an oxygen containing molybdenum component leads to an even more interesting product. The test is carried out under the same conditions as of example 7, but charging to the autoclave 9.87 g of $(PPh_4)_2[MoS_4]$ (0.3% by weight of Mo, relatively to the weight of the residue), and 8.33 g of $MoO_2(acac)_2$ (0,7% by weight of Mo, relatively to the weight of the residue).

Example 9 (Comparative example)

This example shows that the system with the only oxygen-containing molydenum compound is less capable of producing light product, with the total concentration of molybdenum being the same.

The process is carried out under the same conditions as of example 7, but charging 11.9 g of $MoO_2$-$(acac)_2$ (1% of Mo by weight, relatively to the weight of the residue).

Table 1

| Example | Compound | 350- (%) | 510+ (%) | S (%) | Ni (ppm) | V (ppm) | Temperature (°C) | Time (hours) |
|---|---|---|---|---|---|---|---|---|
| Residue | - | 3 | 66 | 3.52 | 76 | 98 | | |
| 1 | $(PPh_4)_2[MoS_4]$ | 34 | 29 | 2.10 | 19 | < 5 | 400 | 2 |
| 2 | $(Et_4N)_2[MoS_4]$ | 28 | 43 | 2.22 | 40 | 31 | 400 | 2 |
| 3 | $(NH_4)_2[MoS_4]$ | 40 | 48* | 2.25 | 48 | 37 | 400 | 2 |
| 4 | $(PPh_4)_2[Mo_3S_9]$ | 42 | 25 | 1.97 | 17 | < 5 | 400 | 2 |
| 5 | $(PPh_4)_2[MoS_4]$ | 48 | 18 | 1.66 | 10 | < 5 | 400 | 5 |
| 6 | $(PPh_4)_2[MoS_4]$ | 72 | 10 | 1.17 | 5 | < 5 | 420 | 5 |
| 7 | $(PPh_4)_2[MoS_4]$ | 48 | 19 | 1.14 | 5 | < 5 | 400 | 5 |
| 8 | $(PPh_4)_2[MoS_4]$^ | 50 | 11 | 0.67 | 2 | < 5 | 400 | 5 |
| 9 | $MoO_2(acac)_2$ | 37 | 22 | 0.67 | 2 | < 5 | 400 | 5 |

Mo = 0.3% by weight in Examples 1-6;
     1  % by weight in Examples 7-9
pH = 20 MPa
* including 12% of coal
^ with $MoO_2(acac)_2$ added

## Claims

1. Catalyst precursor for hydrotreating heavy petroleum fractions, characterized in that said catalyst precursor has the following formula

$Q_2[Mo_xS_y]$,

wherein:
x is equal to, or larger than, 1;
y is equal to, or larger than, 4;
Q is a phosphorus containing salt of formula

$PH_zR_{4-z}$

or

$(PPh_3)N(PPh_3)$,

in which
R     is an alkyl, cycloalkyl, aryl or arylalkyl group containing from 1 to 20 carbon atoms;
z     is an integer comprised within the range of from 0 to 4, and
Ph    is the phenyl group, when x is equal to 3, y is lower than 10.

2.   Catalyst precursor according to claim 1, wherein the alkyl, cycloalkyl, aryl or arylalkyl group contains a number of carbon atoms comprised within the range of from 1 to 10.

3.   Catalyst precursor according to claim 1, wherein the value of z is equal to 0.

4.   Catalyst precursor according to claim 1, wherein the ratio of y/x is equal to, or smaller than, 4.

5.   Catalyst precursor characterized in that it is constituted by 1 or more oxygen-containing molybdenum compounds and a precursor according to claim 1 or 2 or 3 or 4.

6.   Catalyst precursor according to claim 5, wherein the molybdenum percentage in the precursor of formula $Q_2[Mo_xS_y]$ is comprised within the range of from 0.005 to 0.5% by weight, and in the oxygen-containing compound said molybdenum percentage is comprised within the range of from 0.01 to 0.9% by weight.

7.   Catalyst precursor according to claim 5 or 6, wherein the oxygen-containing compound is selected from among molybdenyl-acetylacetonate, molybdenum naphthenate and molybdenum exacarbonyl.

8.   Active catalyst characterized in that it is obtained by activating a precursor according to claim 1 or 2 or 3 or 4 or 5 or 6 or 7, by thermal treatment at temperatures higher than 150°C in a non-oxidizing atmosphere.

9.   Active catalyst according to claim 8, wherein the thermal treatment is carried out in a hydrogen and/or $H_2S$ atmosphere.

10.  Process for hydrotreating heavy petroleum fractions, characterized in that said fractions are caused to react at high temperatures in the presence of hydrogen, by adding the catalyst precursor according to claim 1 or 2 or 3 or 4 or 5 or 6 or 7, used in bulk and non-supported.

11.  Process according to claim 10, wherein the catalyst precursor is added as solutions thereof in a volatile solvent.

12.  Process for hydrotreating heavy petroleum fractions, characterized in that said fractions are caused to react at high temperatures in the presence of hydrogen, by adding the active catalyst according to claim 8 or 9.

13.  Process according to claim 10 or 11 or 12, wherein the molybdenum percentage by weight present in the precursor and/or in the catalyst, relatively to the petroleum fractions, is comprised within the range of from 0.005 to 5%.

**14.** Process according to claim 13, in which the percentage by weight of molybdenum present in the precursor and/or in the catalyst is comprised within the range of from 0.01 to 1%.

**EUROPEAN SEARCH REPORT**

Application Number

EP 92 20 1697

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | US-A-4 430 442 (EXXON) 7 February 1984 * column 5, line 4 - line 53; claims 1-5,7-16,18,20 * | 1-12 | B01J27/051 B01J37/08 B01J31/24 C10G45/04 |
| D,A | US-A-4 243 553 (UNION CARBIDE) 6 January 1981 | | |
| D,A | INORGANIC CHEMISTRY vol. 22, 1983, EASTON USA pages 672 - 678; PAN ET AL: 'Facile Symtheses of New Molybdenum and Tungsten Sulfido Complexes' | | |
| | | | TECHNICAL FIELDS SEARCHED (Int. Cl.5) |
| | | | B01J |

The present search report has been drawn up for all claims

| Place of search | Date of completion of the search | Examiner |
|---|---|---|
| THE HAGUE | 26 AUGUST 1992 | MICHIELS P. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document